(19) **Europäisches Patentamt European Patent Office Office européen des brevets**

(11) **EP 4 748 594 A1**

(12) **EUROPEAN PATENT APPLICATION**

(43) Date of publication:
27.05.2026 Bulletin 2026/22

(51) International Patent Classification (IPC):
**B60C 23/04** $^{(2006.01)}$

(21) Application number: 25218155.7

(22) Date of filing: **24.11.2025**

(52) Cooperative Patent Classification (CPC):
**B60C 23/0474; B60C 23/0476**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.11.2024 US 202463725043 P
24.10.2025 US 202519368445**

(71) Applicant: **The Goodyear Tire & Rubber Company
Akron, OH 44316 (US)**

(72) Inventors:
• **SINGH, Kanwar Bharat
Akron, 44316 (US)**
• **SON, Roman
L-7750 Colmar-Berg (LU)**

(74) Representative: **Kutsch, Bernd
Goodyear S.A.
Patent Department
Avenue Gordon Smith
7750 Colmar-Berg (LU)**

(54) **TIRE LEAK RATE DETECTION SYSTEM AND METHOD**

(57) A system and method for detection of a leak rate in a tire (12) supporting a vehicle (14) is disclosed. The system (10) comprises a sensor (30) mounted on the tire (12) for measuring a pressure (58) of the tire (12); means for transmitting measured pressure data from the sensor (30) to a processor (38, 48); and a filter module (54) configured for being executed on the processor (38, 48). The filter module (54) includes: a leak rate determination module (70), the leak rate determination module (70) being configured for receiving the measured pressure data and including a filter algorithm (72), the filter algorithm (72) being configured for determining a leak rate of the tire (12) from the measured pressure data; an accumulator (88) configured for calculating a cumulative leak score (92) from a plurality of leak rates; and a flag (90) configured for being generated by the filter module (54) when the cumulative leak score (92) exceeds a predetermined leak score threshold and for being transmitted to at least one of a vehicle control system and a display device (50) for actuation of the vehicle (14) in response to the flag (90).

Figure 4

# Description

Field of the Invention

The invention relates generally to tire monitoring systems and methods. More particularly, the invention relates to systems and methods that monitor conditions in a tire, such as tire pressure. Specifically, the invention is directed to a system and a method that provides detection of a tire pressure leak rate in real time.

Background of the Invention

Vehicle tires, and particularly pneumatic tires, typically have certain conditions or parameters that are beneficial to monitor during vehicle operation. For example, monitoring the pressure of a pneumatic tire may be helpful in assessing the condition and/or performance of the tire, as a low pressure may indicate that there is an issue with the tire.

To monitor tire pressure, techniques have been developed to measure the pressure inside the tire cavity using sensors that are attached to the tire. Such techniques obtain pressure data from the sensors. In the event that the measured pressure is below a threshold value, a notification or alert may be generated.

However, many prior art systems do not operate in real time, which may result in a delay in sending a notification when the measured pressure is below a threshold value. Such a delay is undesirable, particularly when there may be a rapid air loss condition or event. In addition, many prior art systems only trigger a notification when the measured pressure is below a threshold value, rather than determining a leak rate, or loss of air pressure in the tire per unit time. Determination of a leak rate enables downward pressure trends to be detected, so that preventive steps may be taken before the measured pressure falls below a threshold value.

Moreover, many prior art systems require a high degree of memory usage and/or have high computational requirements, which undesirably results in increased power requirements, cost, and/or complexity.

As a result, there is a need in the art for a system that provides detection of a tire pressure leak rate in real time, which is capable of operating efficiently with low memory and computational requirements.

Summary of the Invention

The invention relates to a system in accordance with claim 1 and to a method in accordance with claim 15.

Dependent claims refer to preferred embodiments of the invention.

According to an aspect of an exemplary embodiment of the invention, a system for detection of a tire pressure leak rate, in which the tire supports a vehicle, includes a sensor mounted on the tire for measuring a pressure of the tire. Means are provided for transmitting measured pressure data from the sensor to a processor, and a filter module is executed on the processor. The filter module includes a leak rate determination module that receives the measured pressure data and includes a filter algorithm. The filter algorithm determines a leak rate of the tire from the measured pressure data. An accumulator calculates a cumulative leak score from a plurality of leak rates. A flag is generated by the filter module when the cumulative leak score exceeds a predetermined leak score threshold and is transmitted to at least one of a vehicle control system and a display device for actuation of the vehicle in response to the flag.

Brief Description of the Drawings

The invention will be described by way of example and with reference to the accompanying drawings, in which:

Figure 1 is a schematic image of a vehicle and schematic perspective view of a tire that employ an exemplary embodiment of the system for detection of a tire pressure leak rate of the present invention, showing the tire partially in section;

Figure 2 is a schematic plan view of the vehicle shown in Figure 1;

Figure 3 is a schematic perspective view of the vehicle shown in Figure 1 with a representation of data transmission to a cloud-based server and to a display device;

Figure 4 is a flow diagram showing aspects of an exemplary embodiment of the system for detection of a tire pressure leak rate of the present invention;

Figure 5 is a graphical representation showing aspects of the system for detection of a tire pressure leak rate shown in Figure 4; and

Figure 6 is a graphical representation showing additional aspects of the system for detection of a tire pressure leak rate shown in Figure 4.

Similar numerals refer to similar parts throughout the drawings.

Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle, enabling communication between specific vehicle sensing and/or control systems.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Inner liner" means the layer or layers of elastomer or other material that form the inside surface of a tubeless tire and that contain the inflating fluid within the tire.

"Lateral" means an axial direction.

"Radial" and "radially" means directions radially toward or away from the axis of rotation of the tire.

"Tread element" or "traction element" means a rib or a block element defined by a shape having adjacent grooves.

Detailed Description of Preferred Embodiments of the Invention

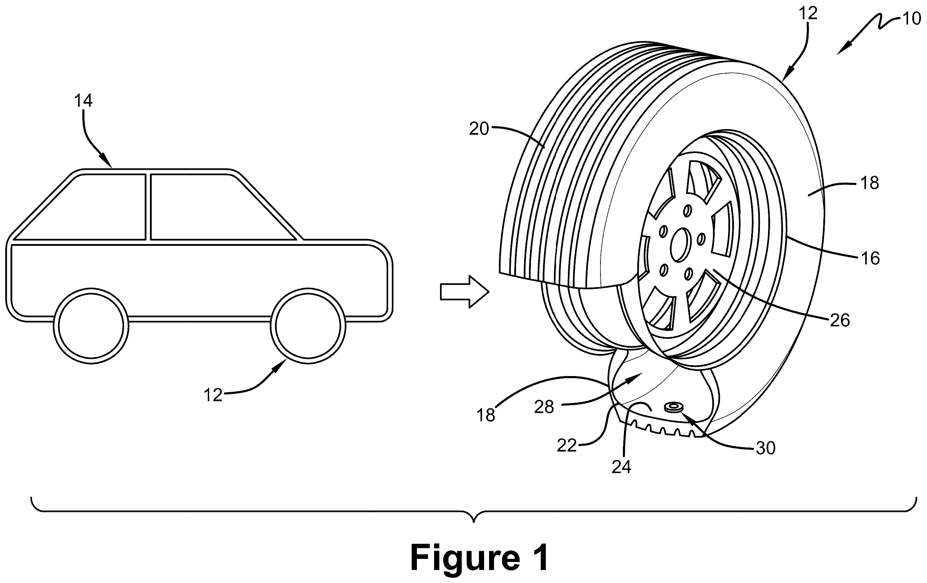

Turning now to Figures 1 through 6, an exemplary embodiment of a system 10 for detection of a tire pressure leak rate of the present invention is presented. With particular reference to Figure 1, the system 10 detects a leak rate in the pressure of each tire 12 which supports a vehicle 14. While the vehicle 14 is depicted as a passenger car, the invention is not to be so restricted. The principles of the invention find application in other vehicle categories such as commercial trucks, off-the-road vehicles, and the like, in which vehicles may be supported by more or fewer tires 12. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 extends radially outward from a respective bead area 16 to a ground-contacting tread 20. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

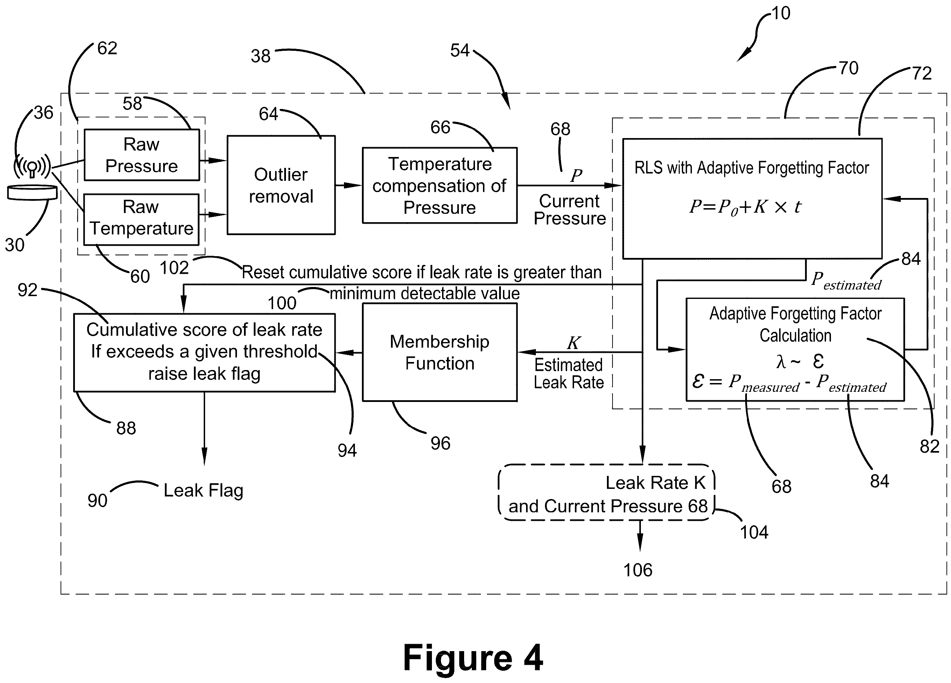

A sensor unit 30 may be attached to the innerliner 24 of each tire 12 by means such as an adhesive for the purpose of detecting certain real-time tire parameters inside the tire, such as tire pressure 58 and temperature 60 (Figure 4). It is to be understood that the sensor unit 30 may be attached in such a manner, or to other components of the tire 12, such as between layers of the carcass 22, on or in one of the sidewalls 18, on or in the tread 20, and/or a combination thereof. For the purpose of convenience, reference herein shall be made to mounting of the sensor unit 30 on the tire 12, with the understanding that mounting includes all such attachment.

Preferably, the sensor unit 30 is a tire pressure monitoring system (TPMS) sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information. Alternatively, tire ID information may be included in another sensor unit, or in a separate tire ID storage medium, such as a tire ID tag. The tire ID information may include manufacturing information for the tire 12, a service history of the tire, specific features and parameters of the tire, and/or mechanical characteristics of the tire.

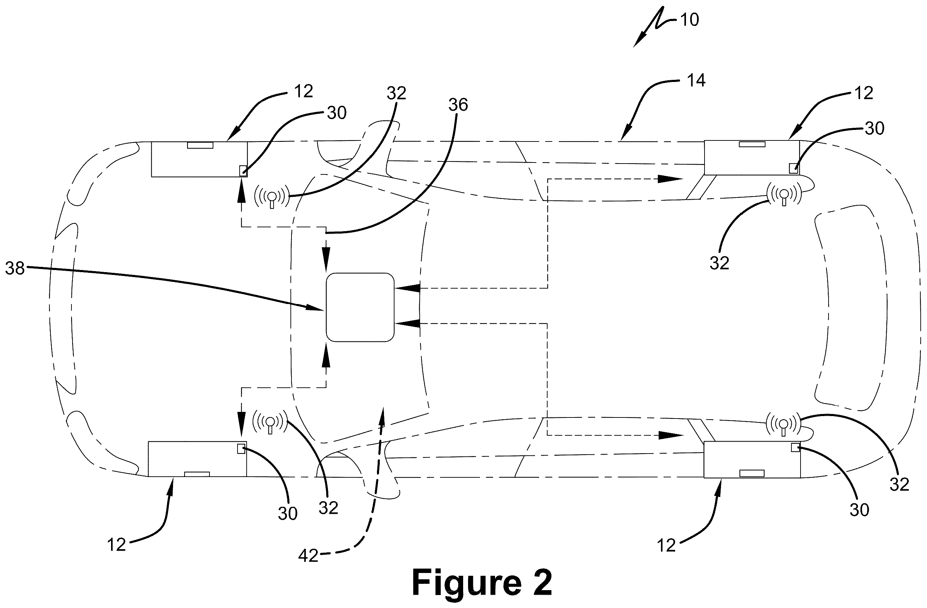

Turning now to Figure 2, each TMPS sensor 30 preferably includes a respective antenna 32 for wireless transmission 36 of the measured tire pressure 58 and temperature 60, as well as tire ID data, to a processor 38. The processor 38 may be mounted on the vehicle 14 as shown or may be integrated into the TPMS sensor 30. For the purpose of convenience, the processor 38 will be described as being mounted on the vehicle 14, with the understanding that the processor may alternatively be integrated into the TPMS sensor 30. Preferably, the processor 38 is in electronic communication with or integrated into an electronic system of the vehicle 14, such as the vehicle CAN bus system 42, which is referred to as the CAN bus.

Aspects of the system 10 preferably are executed on the processor 38 or another processor that is accessible through the vehicle CAN bus 42, which enables input of data from the TMPS sensor 30, as well as input of data from other sensors that are in electronic communication with the CAN bus. In this manner, the tire pressure monitoring system 10 enables direct measurement of tire pressure 58 and temperature 60 with the TPMS sensor 30, and transmission of the measurement data to the processor 38. Tire ID information preferably is also transmitted from the TPMS sensor 30 to the processor 38. The processor 38 preferably correlates the measured tire pressure 58, the measured tire temperature 60, the measurement time, and ID information for each tire 12.

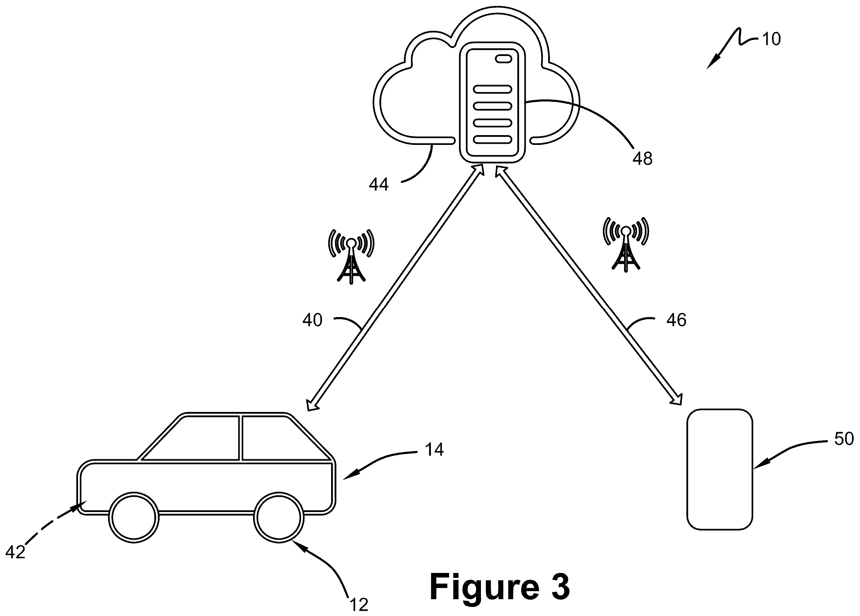

Referring to Figure 3, when the measured tire pressure 58, measured tire temperature 60, measurement time and ID information are correlated for each tire 12, the data may be wirelessly transmitted 40 from the processor 38 (Figure 2) and/or the CAN-bus 42 on the vehicle 14 to a remote processor 48, such as a processor in a cloud-based server 44. The cloud-based server 44 may execute aspects of the system 10. Output from the system 10 may be wirelessly transmitted 46 to a display device 50 that is accessible to an operator of the vehicle 14 or to a fleet manager.

With reference to Figure 4, the system 10 for detection of a tire pressure leak rate includes a filter module 54, which is in electronic communication with and is executed on the processor 38. The filter module 54 receives the measured pressure 58, which is also referred to as the raw pressure measurement, and the measured temperature 60, which is also referred to as the raw temperature measurement, for the tire 12 from the TPMS sensor 30. As mentioned above, the processor 38 preferably correlates the measured tire pressure 58, the measured tire temperature 60, and the measurement time, which may be performed in a correlator 62.

An outlier filter 64 reviews the pressure measurements 58 and the temperature measurements 60 for values that are outside of a predetermined range, and thus are excessively high or low, and removes them. In this manner, the outlier filter 64 removes measured data that may not be accurate due to an anomaly, with such removal improving the accuracy of the system 10.

Once outlier data is removed, the measured pressure 58 preferably is corrected or compensated for the impact of temperature in a compensation module 66. The compensation module 66 may employ any technique for compensation of pressure due to temperature that is known to those skilled in the art and generates a temperature-compensated pressure 68. For example, the ideal gas law may be employed to calculate the temperature-compensated pressure 68, as the volume of the tire cavity 28 is known, the measured pressure 58 is known, and the measured temperature 60 is known.

The temperature-compensated pressure 68 is communicated to a leak rate determination module 70. The leak rate determination module 70 preferably employs a filter algorithm, such as a recursive least squares algorithm 72, which minimizes a function by selecting filter coefficients and updating the filter with new data.

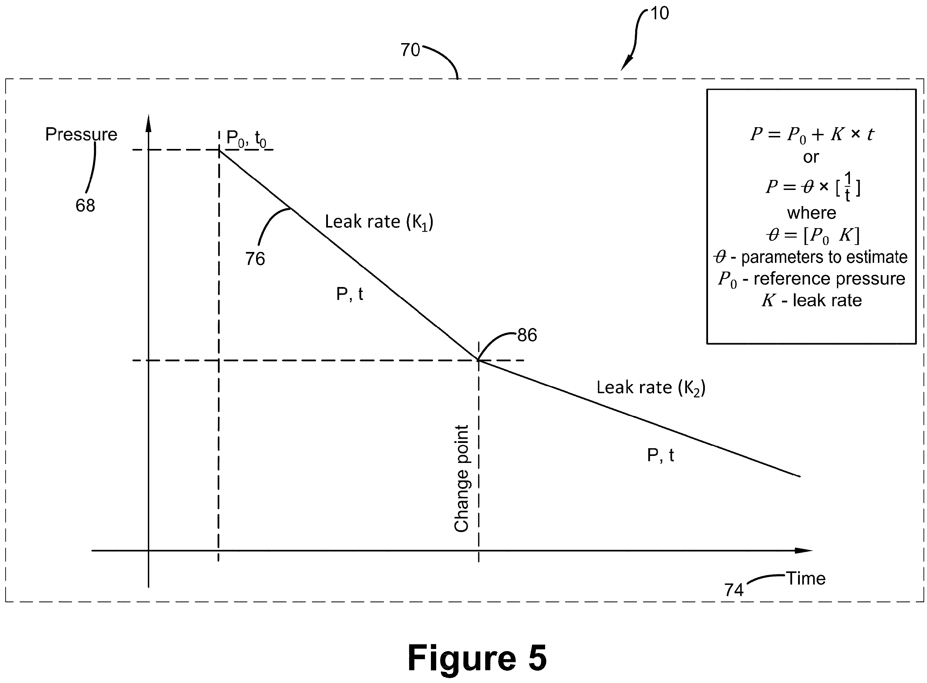

With additional reference to Figure 5, in the leak rate determination module 70, temperature compensated pressure measurements 68 are plotted against their corresponding times 74 of measurement. A first or reference temperature compensated pressure measurement P0 is plotted at a corresponding first or reference measurement time t0, and subsequent temperature compensated pressure measurements P are plotted against corresponding measurement times t, generating a linear relationship that is expressed as a line 76. A leak rate K, which is a loss in pressure in the tire 12 over time, is determined using the recursive least squares algorithm 72.

More particularly, the recursive least squares algorithm 72 preferably employs the following determinations:

1.

$$P = P0 + K \times t,$$

or
2.

$$P = \theta \times [1\ t]^{\mathsf{T}},$$

where 3.

$$\theta = [P0\ K]$$

In which $\theta$ represents the parameters to estimate, P0 represents the reference pressure, and K represents the leak rate. The recursive least squares algorithm 72 preferably is a lightweight recursive least squares formulation with no buffering, which provides for a lightweight implementation to reduce the computing resources that are needed. The recursive least squares algorithm 72 outputs the leak rate K and an estimated pressure 84. The above determinations allow a continuous estimation of a reference pressure P0 and the leak rate K.

More particularly, as measurement of tire pressure 58 by the TPMS sensor 30 continues, the distribution of the time series of pressure measurements may change, which occurs at a change point 86. The change point 86 corresponds to a change in the leak rate K, with one leak rate K1 occurring prior to the change point and another leak rate K2 occurring after the change point. Because the recursive least squares algorithm 72 provides a continuous estimation of the reference pressure P0 and the leak rate K, there is no need to reset the recursive least squares algorithm 72 when the leak rate K changes at the change point 86.

The recursive least squares algorithm 72 preferably employs an adaptive forgetting factor calculation 82, which adjusts the weight of older data samples in the recursive least squares computation. This adjustment allows the algorithm to adapt more quickly to changing conditions or to provide smoother estimates when conditions remain stable.

In the adaptive forgetting factor calculation 82, the forgetting factor is represented by Lambda $\lambda$ and the measurement of error is represented by Epsilon $\varepsilon$. The difference between the measured pressure 68 and the estimated pressure 84 yields the measurement of error $\varepsilon$, which is approximate to the forgetting factor $\lambda$. The adaptive forgetting factor calculation 82 thus reduces statistical noise when the recursive least squares algorithm 72 converges, and enables the algorithm to converge more rapidly when the measured pressure 58 in the tire 12 changes. These characteristics enable the recursive least squares algorithm 72 to have an enhanced response time and produce smoother leak rate estimates while using fewer computing resources.

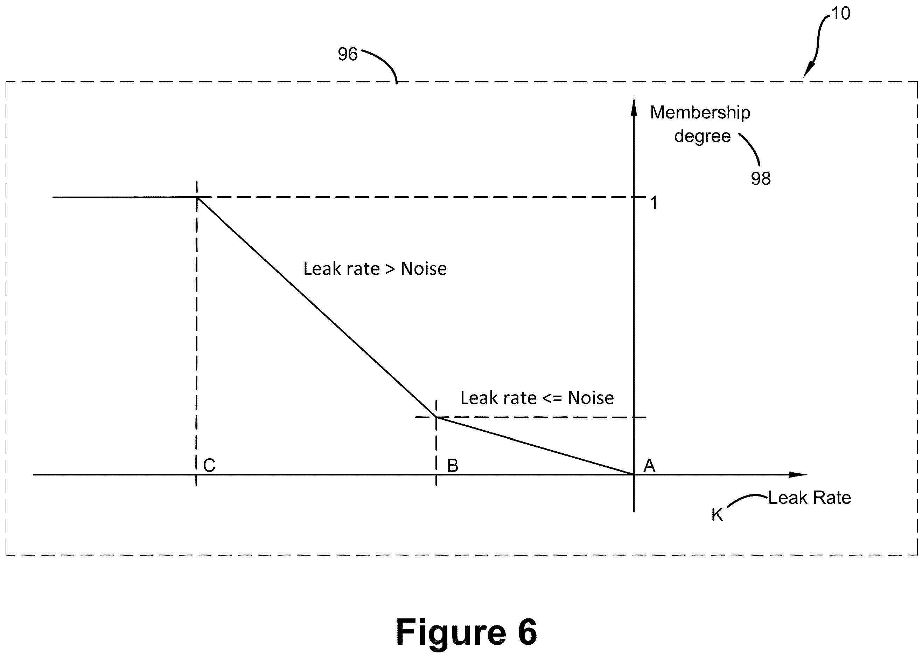

Referring now to Figures 4 and 6, the recursive least squares algorithm 72 generates a leak rate K, which may be input into a membership function 96. The membership function 96 enables an analysis of the leak rate K generated by the recursive least squares algorithm 72 based on degrees of truth. The membership function 96 determines a membership degree 98 of elements in a set by generating a function and mapping inputs to a membership value between zero (0) and one (1). The degree of membership 98 indicates how much an input belongs in the set, with those inputs at one (1) belonging to the set and those inputs at zero (0) not belonging to the set.

The inputs shown in Figure 6 include a set of leak rates K based on continuous generation of leak rates by the recursive least squares algorithm 72. The membership degree 98 of leak rates K is divided into regions represented by the letters A, B and C. The A-B region is a statistically noisy region of leak rates K, providing a lower degree of membership 98, which minimizes false leak alerts. The B-C region is a region in which the statistical noise is lower than the leak rates K, providing a higher degree of membership 98, which in turn provides more rapid generation of alerts 90 for fast leaks. Values at C, which is the maximum degree of membership 98, keeps a cumulative score 92 of leak rates K from reaching unnecessarily high values.

It is to be understood that the membership function 96 shown in Figure 6 is by way of example, as the membership function may include any similar shape or form without affecting the overall concept or operation of the system 10 of the invention. For example, instead of defined, rectangular edges, the membership function 96 may include rounded or amorphous shapes that may be smoothed using quadratic function.

In this manner, the membership function 96 analyzes the leak rates K generated by the recursive least squares algorithm 72 and filters the leak rates to ensure that the most accurate generated leak rates are input into an accumulator 88. Returning to Figure 4, the accumulator 88 aggregates the outputs of the membership function 96 and calculates a cumulative leak score 92. The accumulator 88 compares the cumulative leak score 92 to a predetermined leak score threshold 94, and when the cumulative leak score exceeds the predetermined threshold, the filter module 54 generates a leak flag 90.

Preferably, the filter module 54 includes a minimum detectable value 100 for the cumulative leak score 92. When the cumulative leak score 92 is greater than the minimum detectable value 100, the accumulator 88 executes a reset 102 of the cumulative leak score. The reset 102 enables generation of the flag 90 to be more stable and avoid variances in statistical noise that may occur due to fluctuations in the leak rate K. Optionally, the filter module 54 may include an aggregator 104 that enables leak rates K and temperature compensated pressures 68 to be combined or aggregated, with an additional flag 106 being generated when the combination deviates beyond predetermined thresholds.

Returning to Figure 3, when the flag 90 is generated by the filter module 54, the flag may be transmitted from the processor 38 through the vehicle CAN bus system 42 to an electronic control system of the vehicle. The flag 90 may then be employed to actuate and thus improve the function of a vehicle control system, such as an anti-lock brake system (ABS), electronic stability control system (ECS), and the like. The flag 90 may also be wirelessly transmitted to the display device 50 that is accessible to an operator of the vehicle 14 or to a fleet manager. The operator may actuate the vehicle 14 to take appropriate action in response to the flag 90. The fleet manager may schedule an action or instruct the vehicle operator to actuate the vehicle 14 to take appropriate action in response to the flag 90.

In this manner, the system 10 for detection of a tire pressure leak rate of the present invention includes the filter module 54, which analyzes measured pressure data 58 from each TPMS sensor 30 and provides an effective technique for tracking the leak rate K of the tire 12 in real time. The recursive least squares algorithm 72 enables the filter module 54 to continuously and effectively track changing leak rates K. By estimating both the leak rate K and the reference pressure P0, the recursive least squares algorithm 72 is less vulnerable to noise in pressure measurements 58, which improves the robustness of the system 10 and reduces false leak alerts. The initialization of the recursive least squares algorithm 72 reduces converge time, which enables flags 90 to be generated more rapidly.

Use of the adaptive forgetting factor calculation 82 with the recursive least squares algorithm 72 enhances the response time of the system 10 and reduces statistical noise in the estimates of leak rate K. The adaptive forgetting factor calculation 82 also enables the recursive least squares algorithm 72 to track changes in the leak rate K more effectively. Using the membership function 96, calculating the cumulative score 92 of leak rate K, and setting the threshold 94 in the accumulator 88 for generating the flag 90 stabilizes leak detection of the system 10 and reduces noise-induced fluctuations without the need to store multiple data points in memory. The membership function 96 also improves the time required for the system 10 respond to leaks and generate the flag 90.

These characteristics enable the system 10 for detection of a tire pressure leak rate of the present invention to detect a tire pressure leak rate in real time, while operating efficiently with low memory and computational requirements.

The present invention also includes a method of detecting a tire pressure leak rate. The method includes steps in accordance with the description that is presented above and shown in Figures 1 through 6.

It is to be understood that the structure of the above-described system for detection of a tire pressure leak rate may be altered or rearranged, or components or steps known to those skilled in the art omitted or added, without affecting the overall concept or operation of the invention. For example, application of the membership function 96 is not limited to determination of the leak rate K.

## Claims

1. A system for detection of a leak rate in a tire (12), the tire (12) supporting a vehicle (14), the system (10) comprising a sensor (30) mounted on the tire (12) for measuring a pressure (58) of the tire (12); means for transmitting measured pressure data from the sensor (30) to a processor (38, 48); and a filter module (54) configured for being executed on the processor (38, 48), the filter module (54) including:

> a leak rate determination module (70), the leak rate determination module (70) being configured for receiving the measured pressure data and including a filter algorithm (72), the filter algorithm (72) being configured for determining a leak rate of the tire (12) from the measured pressure data;
> an accumulator (88) configured for calculating a cumulative leak score (92) from a plurality of leak rates; and
> a flag (90) configured for being generated by the filter module (54) when the cumulative leak score (92) exceeds a predetermined leak score threshold and for being transmitted to at least one of a vehicle control system and a display device (50) for actuation of the vehicle (14) in response to the flag (90).

2. The system of claim 1, wherein the sensor (30) is configured to measure a temperature of the tire (12).

3. The system of claim 1 or 2, wherein the filter module (54) further comprises a correlator (62), the correlator (62) being configured for receiving and correlating the measured pressure, the measured temperature, and a measurement time.

4. The system of at least one of the previous claims, wherein the filter module (54) further comprises an outlier filter (64), the outlier filter (64) being configured for receiving the measured pressure and the measured temperature and for removing pressure measurements and temperature measurements that are outside of a predetermined range.

5. The system of at least one of the previous claims, wherein the filter module (54) further comprises a compensation module (66), the compensation module (66) being configured for receiving the measured pressure and the measured temperature and for generating a temperature-compensated pressure from the measured pressure and the measured temperature.

6. The system of at least one of the previous claims, wherein the filter algorithm (72) is a recursive least squares algorithm, the recursive least squares algorithm preferably including a lightweight recursive least squares formulation with no buffering.

7. The system of at least one of the previous claims, wherein the recursive least squares algorithm (72) determinations allow a continuous estimation of a reference pressure and the leak rate; and/or wherein the recursive least squares algorithm (72) employs an adaptive forgetting factor calculation (82).

8. The system of at least one of the previous claims, wherein use of the adaptive forgetting factor (82) is configured to enhance the response time and produces smoother leak rate estimates.

9. The system of at least one of the previous claims, wherein the filter module (54) further comprises a membership function (96) configured for receiving a plurality of leak rates from the filter algorithm (72) and for analyzing the plurality of leak rates based on degrees of truth.

10. The system of at least one of the previous claims, wherein the accumulator (88) is configured to compare the cumulative leak score (92) to the predetermined leak score threshold.

11. The system of at least one of the previous claims, wherein the accumulator (88) is configured to receive the plurality of leak rates from the membership function (96).

12. The system of at least one of the previous claims, wherein the filter module (54) includes a minimum detectable value (100) for the cumulative leak score (92), and, when the cumulative leak score (92) is greater than the minimum detectable value (100), the accumulator (88) is configured to execute a reset of the cumulative leak score (92).

13. The system of at least one of the previous claims, wherein the filter module (54) further comprises an aggregator (104) that is configured to combine leak rates and temperature compensated pressures.

14. The system of at least one of the previous claims, wherein the display device (50) is accessible to an operator of the vehicle (14) and wherein the operator is able to actuate the vehicle (14) in response to the flag (90); and/or wherein the display device (50) is accessible to a fleet manager and the fleet manager is able to schedule an action or to instruct a vehicle operator to actuate the vehicle (14) in response to the flag (90).

15. A method of detection of a leak rate in a tire, the tire supporting a vehicle, the method comprising:
providing a system (10), preferably a system (10) in accordance with at least one of the previous claims, comprising a sensor (30) mounted on the tire (12) for measuring a pressure of the tire (12), means for transmitting measured pressure data from the sensor (30) to a processor (38, 48), and a filter module (54) that is executed on the processor (38, 48), the filter module (54) including:

a leak rate determination module (70), wherein the leak rate determination module (70) receives the measured pressure data and includes a filter algorithm (72) and wherein the filter algorithm (72) determines a leak rate of the tire (12) from the measured pressure data;

an accumulator (88) calculating a cumulative leak score (92) from a plurality of leak rates; and a flag (90) that is generated by the filter module (54) when the cumulative leak score (92) exceeds a predetermined leak score threshold and that is transmitted to at least one of a vehicle control system and a display device (50) for actuation of the vehicle (14) in response to the flag (90).

**Figure 1**

EP 4 748 594 A1

**Figure 2**

Figure 3

**Figure 4**

EP 4 748 594 A1

**Figure 5**

EP 4 748 594 A1

**Figure 6**

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 004 019 B2 (SIEMENS AG [DE]) 28 February 2006 (2006-02-28) | 1-3,5, 10,12-15 | INV. B60C23/04 |
| Y | * column 3 - column 5; figures 1-3 * ----- | 4,6-9,11 | |
| Y | EP 4 344 907 A1 (GOODYEAR TIRE & RUBBER [US]) 3 April 2024 (2024-04-03) * paragraph [0023] - paragraph [0052]; figures 1-5 * ----- | 4 | |
| Y | US 2004/017289 A1 (BROWN JACK EDWARD [US] ET AL) 29 January 2004 (2004-01-29) * paragraph [0040] - paragraph [0113]; figures 1-12 * ----- | 6-9,11 | |
| A | US 2023/001752 A1 (DOLBERG LAUTARO [LU] ET AL) 5 January 2023 (2023-01-05) * paragraph [0036] - paragraph [0061]; figures 1-9 * ----- | 1-15 | |

**TECHNICAL FIELDS SEARCHED (IPC)**

B60C

The present search report has been drawn up for all claims

| Place of search | Date of completion of the search | Examiner |
|---|---|---|
| Munich | 15 April 2026 | Billen, Karl |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 8155

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2026

| Patent document cited in search report | | Publication date | Patent family member(s) | | Publication date |
|---|---|---|---|---|---|
| US 7004019 | B2 | 28-02-2006 | DE | 10144361 A1 | 03-04-2003 |
| | | | FR | 2829423 A1 | 14-03-2003 |
| | | | GB | 2381635 A | 07-05-2003 |
| | | | US | 2003074961 A1 | 24-04-2003 |
| EP 4344907 | A1 | 03-04-2024 | EP | 4344907 A1 | 03-04-2024 |
| | | | US | 2024109378 A1 | 04-04-2024 |
| US 2004017289 | A1 | 29-01-2004 | BR | 0302173 A | 08-09-2004 |
| | | | DE | 60318781 T2 | 12-02-2009 |
| | | | EP | 1384604 A1 | 28-01-2004 |
| | | | JP | 4585184 B2 | 24-11-2010 |
| | | | JP | 2004058998 A | 26-02-2004 |
| | | | US | 2004017289 A1 | 29-01-2004 |
| US 2023001752 | A1 | 05-01-2023 | EP | 4112335 A1 | 04-01-2023 |
| | | | US | 2023001752 A1 | 05-01-2023 |

EPO FORM P0459

For more details about this annex : see Official Journal of the European Patent Office, No. 12/82